# EUROPEAN PATENT APPLICATION

(11) **EP 4 632 660 A1**
(43) Date of publication of application: **15.10.2025**
(21) Application number: 23900411.2
(22) Date of filing: 15.11.2023
(51) Int. Cl.: G06Q 50/04

(54) **DATA DISPLAY DEVICE, ANALYSIS SYSTEM, DATA DISPLAY METHOD, AND PROGRAM**

(30) Priority: 05.12.2022 JP 2022194468
(71) Applicant: Resonac Corporation, Tokyo 105-7325 (JP)
(72) Inventor: YOSHIDA, Katsuhisa, Tokyo 105-7325 (JP); KAWAHARA, Yu, Tokyo 105-7325 (JP); TONEGAWA, Sho, Tokyo 105-7325 (JP); YAMASHITA, Tamotsu, Tokyo 105-7325 (JP); SAKAWAKI, Akira, Tokyo 105-7325 (JP); HASEGAWA, Kota, Tokyo 105-7325 (JP)
(74) Representative: Strehl & Partner mbB
(86) International application number: PCT/JP2023/041099
(87) International publication number: WO 2024/122290

(57) **Abstract**

One object is to verify the validity of data. A data display device communicable with an analysis data management device that manages analysis data and a verification data management device that manages verification data via a network, includes an analysis data acquisition unit configured to acquire a plurality of analysis data from the analysis data management device, an analysis data display unit configured to display the plurality of analysis data in a comparable manner, a verification data acquisition unit configured to acquire, from the verification data management device, verification data for verifying a validity of target data selected from the plurality of analysis data, and a verification data display unit configured to display the target data and the verification data in association with each other.

## Description

### TECHNICAL FIELD

The present disclosure relates to data display devices, analysis systems, data display methods, and programs.

### BACKGROUND ART

An analysis system capable of viewing and comparing data, such as physical properties or the like of various substances, is utilized in the field of developing materials, for example. By utilizing such an analysis system, it is possible for a person who is not an analysis expert specialized in data analysis to study characteristics and compositions of the materials.

For example, Non-Patent Document 1 discloses a database of first principles calculation results of substance materials. The database disclosed in Non-Patent Document 1 provides a crystal structure, a band structure, a thermodynamic quantity, a phase diagram, a magnetic moment, or the like for each substance.

### PRIOR ART DOCUMENTS

### NON-PATENT DOCUMENTS

Non-Patent Document 1: Lawrence Berkeley National Laboratory, "The Materials Project", [online], [retrieved on October 26, 2022], Internet <URL: https://materialsproject.org/>

### DISCLOSURE OF THE INVENTION

### PROBLEM TO BE SOLVED BY THE PRESENT INVENTION

However, the conventional technique has a problem that information that can verify a validity of data cannot be viewed. For example, in the conventional technique disclosed in Non-Patent Document 1, a log of calculations that are being performed and a range of physical property data are limited, and the log and the range of the physical property data are insufficient to verify the validity of the data.

One object according to one aspect of the present disclosure is to enable verifying a validity of data.

### MEANS OF SOLVING THE PROBLEM

The present disclosure includes the following configurations.
[1] A data display device communicable with an analysis data management device that manages analysis data and a verification data management device that manages verification data via a network, the data display device comprising:
   an analysis data acquisition unit configured to acquire a plurality of analysis data from the analysis data management device;
   an analysis data display unit configured to display the plurality of analysis data in a comparable manner;
   a verification data acquisition unit configured to acquire, from the verification data management device, verification data for verifying a validity of target data selected from the plurality of analysis data; and
   a verification data display unit configured to display the target data and the verification data in association with each other.
[2] The data display device according to [1] above, wherein:
   the analysis data display unit is configured to display the plurality of analysis data in association with a link to the verification data, and
   the verification data acquisition unit is configured to acquire the verification data related to the analysis data associated with the link in response to an operation with respect to the link.
[3] The data display device according to [1] or [2] above, further comprising:
   a data input unit configured to receive the target data regenerated based on the verification data; and
   a data registration unit configured to register the regenerated target data in the analysis data management device.
[4] The data display device according to any one of [1] to [3] above, wherein:
   the analysis data includes information indicating a material and physical properties of the material, and
   the verification data includes condition values used for generating the physical properties, and history information at a time when the physical properties are generated.
[5] The data display device according to any one of [1] to [4] above, wherein the verification data is an electronic lab notebook or article data.
[6] An analysis system comprising an analysis data management device that manages analysis data, a verification data management device that manages verification data, and a data display device, communicable with one another via a network, wherein the data display device includes:
   an analysis data acquisition unit configured to acquire a plurality of analysis data from the analysis data management device;
   an analysis data display unit configured to display the plurality of analysis data in a comparable manner;
   a verification data acquisition unit configured to acquire, from the verification data management device, verification data for verifying a validity of target data selected from the plurality of analysis data; and
   a verification data display unit configured to display the target data and the verification data in association with each other.
[7] A data display method to be implemented in a computer communicable with an analysis data management device that manages analysis data and a verification data management device that manages verification data via a network, the data display method comprising procedures performed by the computer and including:
   acquiring a plurality of analysis data from the analysis data management device;
   displaying the plurality of analysis data in a comparable manner;
   acquiring, from the verification data management device, verification data for verifying a validity of target data selected from the plurality of analysis data; and
   displaying the target data and the verification data in association with each other.
[8] A program for causing a computer, communicable with an analysis data management device that manages analysis data and a verification data management device that manages verification data via a network, to perform procedures including:
   acquiring a plurality of analysis data from the analysis data management device;
   displaying the plurality of analysis data in a comparable manner;
   acquiring, from the verification data management device, verification data for verifying a validity of target data selected from the plurality of analysis data; and
   displaying the target data and the verification data in association with each other.

### EFFECTS OF THE PRESENT INVENTION

According to an aspect of the present disclosure, it is possible to verify a validity of data.

### BRIEF DESCRIPTION OF THE DRAWINGS

[FIG. 1] FIG. 1 is a block diagram illustrating an example of an overall configuration of an analysis system.
[FIG. 2] FIG. 2 is a block diagram illustrating an example of a hardware configuration of a computer.
[FIG. 3] FIG. 3 is a block diagram illustrating an example of a functional configuration of the analysis system.
[FIG. 4] FIG. 4 is a flow chart illustrating an example of a viewing process.
[FIG. 5] FIG. 5 is a schematic diagram illustrating an example of a viewing screen.
[FIG. 6] FIG. 6 is a schematic diagram illustrating an example of a verification screen.
[FIG. 7] FIG. 7 is a flow chart illustrating an example of a verification process.

### MODE OF CARRYING OUT THE INVENTION

Hereinafter, embodiments of the present disclosure will be described with reference to the accompanying drawings. In the specification and the drawings, constituent elements having substantially the same functional configuration are designated by the same reference numerals, and a redundant description thereof will be omitted.

### [Embodiments]

One embodiment of the present disclosure relates to an analysis system for analyzing data, such as physical properties or the like of various substances, stored in a database. The analysis system according to the present embodiment extracts substances satisfying a composition and characteristics specified by a user, for example, and displays the substances in a comparable manner. According to the analysis system of the present embodiment, the user can search for the substance satisfying the desired characteristics and having the composition satisfying a desired condition. By using the analysis system according to the present embodiment, it is possible to search for a novel functional material using aluminum nitride (AlN), for example.

Conventionally, analysis systems capable of viewing and comparing data stored in a database, such as physical properties or the like of substances, are used. However, it is difficult for the conventional analysis systems to verify a validity of the data. The data stored in the database is often a collection of data calculated by various researchers and data published in articles. There is a possibility that such data includes data having a low reliability. In order to ensure reliability and reproducibility of the analysis result, it is important to be able to verify a generation process or the like of the data.

The analysis system according to the present embodiment stores data used for analysis (hereinafter also referred to as "analysis data") and data that can verify the validity of the analysis data (hereinafter also referred to as "verification data") in association with each other, and has a configuration capable of displaying the verification data from the analysis data being viewed. Hence, according to the analysis system of the present embodiment, the user can easily verify the validity of the analysis data being viewed.

Further, the analysis system according to the present embodiment has a configuration capable of storing new analysis data in association with the verification data, when the analysis data is regenerated based on the verification data. Thus, according to the analysis system of the present embodiment, it is possible to improve the reliability and reproducibility of the analysis data, and to obtain a more accurate analysis result.

### <Overall Configuration of Analysis System>

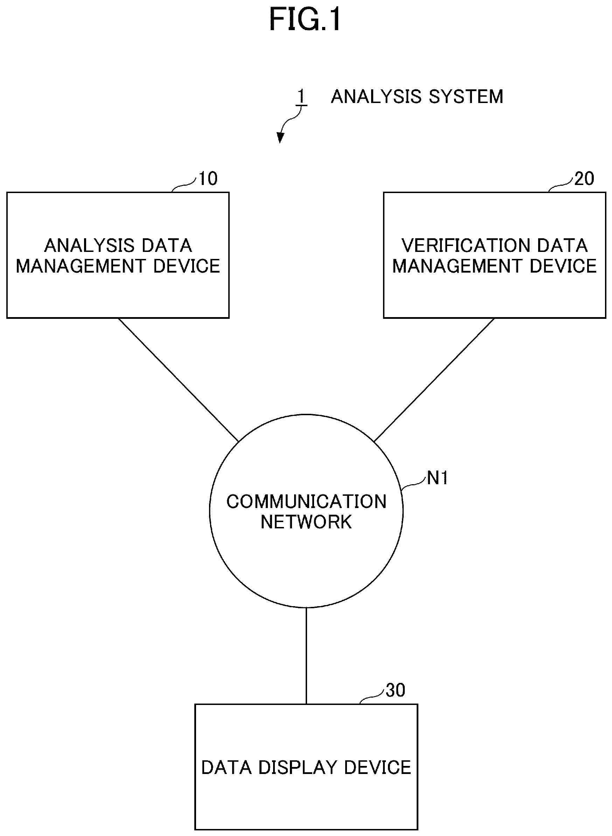

An overall configuration of the analysis system according to the present embodiment will be described with reference to FIG. 1. FIG. 1 is a block diagram illustrating an example of the overall configuration of the analysis system according to the present embodiment.

As illustrated in FIG. 1, an analysis system 1 in the present embodiment includes an analysis data management device 10, a verification data management device 20, and a data display device 30. The analysis data management device 10, the verification data management device 20, and the data display device 30 are connected and communicable with one another via a communication network N1, such as a local area network (LAN), the Internet, or the like.

The analysis data management device 10 is an information processing device, such as a personal computer, a work station, a server, or the like configured to manage analysis data. The analysis data management device 10 extracts prestored analysis data in response to a request from the data display device 30, and transmits the extracted analysis data to the data display device 30.

The verification data management device 20 is an information processing apparatus, such as a personal computer, a work station, a server, or the like configured to manage verification data. The verification data management device 20 acquires prestored verification data in response to a request from the data display device 30, and transmits the acquired verification data to the data display device 30.

The data display device 30 is an information processing terminal, such as a personal computer, a smartphone, a tablet terminal, or the like configured to display the analysis data and the verification data. The data display device 30 acquires a plurality of analysis data from the analysis data management device 10, and displays the plurality of acquired analysis data with respect to the user in a comparable manner. The data display device 30 acquires the verification data from the verification data management device 20 for a target data selected from the plurality of analysis data, and displays the target data and the verification data in association with each other.

The overall configuration of the analysis system 1 illustrated in FIG. 1 is merely an example, and various system configuration examples may be employed depending on application and purpose. For example, one or more of the analysis data management device 10, the verification data management device 20, and the data display device 30 may be included in the analysis system 1. For example, the analysis data management device 10 and the verification data management device 20 may be implemented by a plurality of computers, or may be implemented as a cloud computing service. The device classification, such as the analysis data management device 10, the verification data management device 20, and the data display device 30 illustrated in FIG. 1, is merely an example.

### <Hardware Configuration of Analysis System>

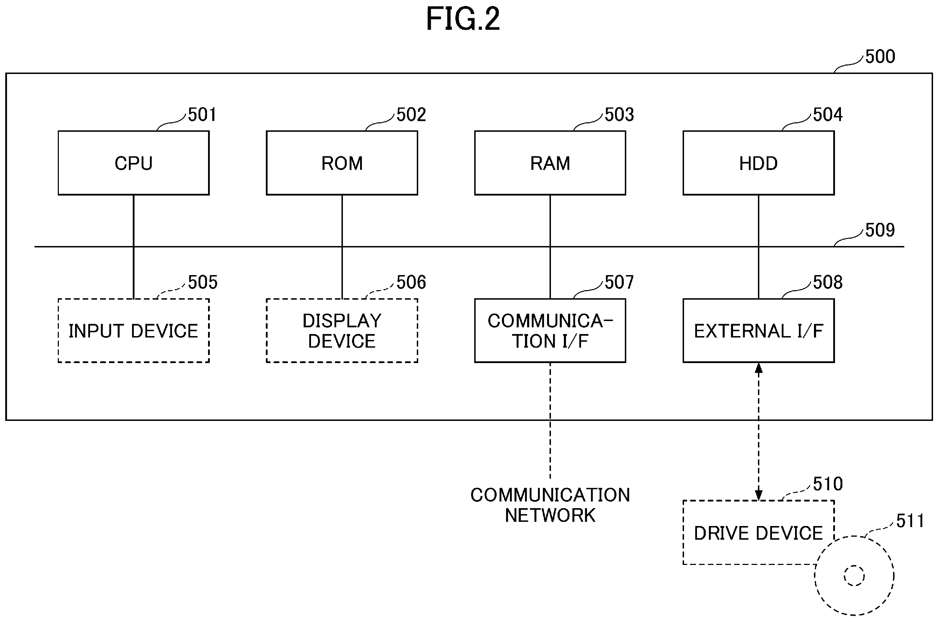

A hardware configuration of the analysis system 1 according to the present embodiment will be described with reference to FIG. 2.

### <<Hardware Configuration of Computer>>

The analysis data management device 10, the verification data management device 20, and the data display device 30 of the present embodiment are implemented by a computer, for example. FIG. 2 is a block diagram illustrating an example of a hardware configuration of a computer 500 according to the present embodiment.

As illustrated in FIG. 2, the computer 500 includes a central processing unit (CPU) 501, a read only memory (ROM) 502, a random access memory (RAM) 503, a hard disk drive (HDD) 504, an input device 505, a display device 506, a communication interface (I/F) 507, and an external I/F 508. The CPU 501, the ROM 502, and the RAM 503 form a so-called computer. Hardware components of the computer 500 are connected to one another via a bus line 509. The input device 505 and the display device 506 may be used in a state connected to the external I/F 508.

The CPU 501 is an arithmetic unit configured to read programs and data from a storage device, such as the ROM 502, the HDD 504, or the like into the RAM 503, and perform processes to implement control and functions of the entire computer 500.

The ROM 502 is an example of a non-volatile memory (storage device) capable of retaining the programs and the data even when the power is turned off. The ROM 502 functions as a main storage device configured to store various programs, data, or the like required by the CPU 501 to execute the various programs installed in the HDD 504. More specifically, the ROM 502 stores a boot program, such as a basic input-output system (BIOS), an extensible firmware interface (EFI), or the like that is executed when booting the computer 500, and data, such as operating system (OS) settings, network settings, or the like.

The RAM 503 is an example of a volatile memory (storage device) from which the programs and the data are erased when the power is turned off. The RAM 503 is a dynamic random access memory (DRAM), a static random access memory (SRAM), or the like, for example. The RAM 503 provides a work area into which the various programs installed in the HDD 504 are loaded when the CPU 501 executes the various programs.

The HDD 504 is an example of a non-volatile storage device. The programs and the data stored in the HDD 504 include the OS which is the basic software for controlling the entire computer 500, applications for providing various functions on the OS, or the like. The computer 500 may use a storage device (for example, a solid state drive (SSD)) using a flash memory, as a storage medium in place of the HDD 504.

The input device 505 is a touchscreen panel, operation keys or buttons, a keyboard, a mouse, a microphone for inputting sound data, such as voice or the like, or the like used by the user to input various signals.

The display device 506 is configured by a display, such as a liquid crystal display, an organic electro-luminescence (EL) display, or the like that displays a screen, a speaker that outputs sound data, such as voice or the like, or the like.

The communication I/F 507 is an interface that is connected to a communication network and through which the computer 500 performs a data communication.

The external I/F 508 is an interface with respect to an external device. The external device includes a drive device 510 or the like.

The drive device 510 is a device to which a recording medium 511 is set. The recording medium 511 includes a medium for optically, electrically, or magnetically recording information, such as a CD-ROM, a flexible disk, a magneto-optical disk, or the like. In addition, the recording medium 511 may include a semiconductor memory or the like that electrically records information, such as a ROM, a flash memory, or the like. Hence, the computer 500 can read and/or write data from/to the recording medium 511 via the external I/F 508.

The various programs to be installed in the HDD 504 are installed by setting a distributed recording medium 511 in the drive device 510 connected to the external I/F 508, for example, and reading the various programs recorded in the recording medium 511 by the drive device 510. Alternatively, the various programs to be installed in the HDD 504 may be installed by being downloaded from another network different from the communication network, via the communication I/F 507.

### <Functional Configuration of Analysis System>

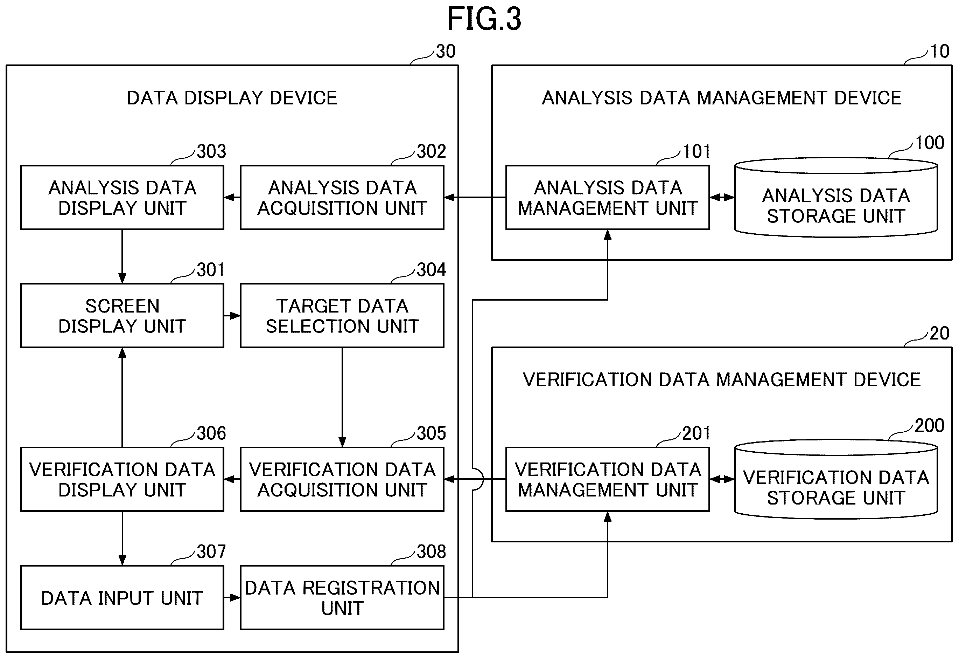

A functional configuration of the analysis system according to the present embodiment will be described with reference to FIG. 3. FIG. 3 is a block diagram illustrating an example of the functional configuration of the analysis system 1 according to the present embodiment.

### <<Functional Configuration of Analysis Data Management Device>>

As illustrated in FIG. 3, the analysis data management device 10 of the present embodiment includes an analysis data storage unit 100 and an analysis data management unit 101.

The analysis data storage unit 100 is implemented by the HDD 504 illustrated in FIG. 2. The analysis data management unit 101 is implemented by processes performed by the CPU 501 when the CPU 501 executes the program loaded from the HDD 504 to the RAM 503 illustrated in FIG. 2.

The analysis data storage unit 100 prestores a plurality of analysis data. The analysis data is the data to be analyzed when the user or the like of the analysis system 1 performs viewing, comparing, or the like. The analysis data includes identification information for identifying a substance, physical properties of the substance, or the like, for example. The physical properties included in the analysis data may be values measured by an experiment, values calculated by a simulation of the first principles calculation or the like, or values predicted by a machine learning model.

Each analysis data is associated with the verification data for verifying the analysis data. Specifically, each analysis data is provided with information capable of acquiring the verification data stored in the verification data management device 20. The information capable of acquiring the verification data is link information or the like capable of directly calling the verification data, such as a uniform resource locator (URL) of the verification data, for example.

The analysis data management unit 101 extracts the analysis data satisfying a specified extraction condition from the analysis data storage unit 100, in response to a request from the data display device 30, and transmits the extracted analysis data to the data display device 30. The analysis data management unit 101 stores new analysis data in the analysis data storage unit 100, in response to a request from the data display device 30.

### <<Functional Configuration of Verification Data Management Device>>

As illustrated in FIG. 3, the verification data management device 20 of the present embodiment includes a verification data storage unit 200 and a verification data management unit 201.

The verification data storage unit 200 is implemented by the HDD 504 illustrated in FIG. 2. The verification data management unit 201 is implemented by processes performed by the CPU 501 when the CPU 501 executes the program loaded from the HDD 504 to the RAM 503 illustrated in FIG. 2.

The verification data storage unit 200 prestores a plurality of verification data. The verification data is data for verifying the validity of the analysis data. The verification data includes condition values used to generate the physical properties included in the analysis data, and history information at a time when the physical property values are generated, for example. In the case where the physical properties are values measured by the experiment, the condition values are experimental conditions or the like, and the history information is a transition or the like of the values measured during the experiment. In the case where the physical properties are values calculated by the simulation, the condition values are calculation conditions, calculation environments, or the like used for the calculation, and the history information is a log file or the like indicating a calculation process.

Specifically, the verification data is an electronic lab notebook for electronically managing a record of the experiment, for example. Further, the verification data is article data or the like electronically recording contents of the article in which the analysis data is published, for example.

The verification data management unit 201 reads the specified verification data from the verification data storage unit 200, in response to a request from the data display device 30, and transmits the read verification data to the data display device 30. The verification data management unit 201 stores new verification data in the verification data storage unit 200, in response to a request from the data display device 30.

### <<Functional Configuration of Data Display Device>>

As illustrated in FIG. 3, the data display device 30 of the present embodiment includes a screen display unit 301, an analysis data acquisition unit 302, an analysis data display unit 303, a target data selection unit 304, a verification data acquisition unit 305, a verification data display unit 306, a data input unit 307, and a data registration unit 308.

The screen display unit 301, the analysis data acquisition unit 302, the analysis data display unit 303, the target data selection unit 304, the verification data acquisition unit 305, the verification data display unit 306, the data input unit 307, and the data registration unit 308 are implemented by processes performed by the CPU 501 when the CPU 501 executes the program loaded from the HDD 504 to the RAM 503 illustrated in FIG. 2.

The screen display unit 301 outputs a viewing screen for displaying a plurality of analysis data in a comparable manner, and a verification screen for displaying the analysis data and the verification data in association with each other, to the display device 506.

The analysis data acquisition unit 302 acquires the analysis data satisfying the extraction condition specified on the viewing screen, from the analysis data management device 10.

The analysis data display unit 303 displays the plurality of analysis data acquired by the analysis data acquisition unit 302, in a comparable manner on the viewing screen.

The target data selection unit 304 selects the target data to be verified of the validity thereof, from the plurality of analysis data displayed on the viewing screen, in response to an operation performed by the user with respect to the viewing screen.

The verification data acquisition unit 305 acquires the verification data for verifying the validity of the target data selected by the target data selection unit 304, from the verification data management device 20.

The verification data display unit 306 displays the verification data acquired by the verification data acquisition unit 305 on the verification screen in association with the target data selected by the target data selection unit 304.

The data input unit 307 receives target data regenerated based on the verification data (hereinafter also referred to as "new target data"). The new target data includes physical properties regenerated according to the condition values indicated in the verification data. The data input unit 307 may receive new verification data (hereinafter also referred to as "new verification data") that is obtained when the new target data is regenerated.

The data registration unit 308 requests registration of the new target data received by the data input unit 307, to the analysis data management device 10. When the data input unit 307 receives the new verification data, the data registration unit 308 requests the registration of the new verification data to the verification data management device 20.

### <Processing Procedure of Analysis System>

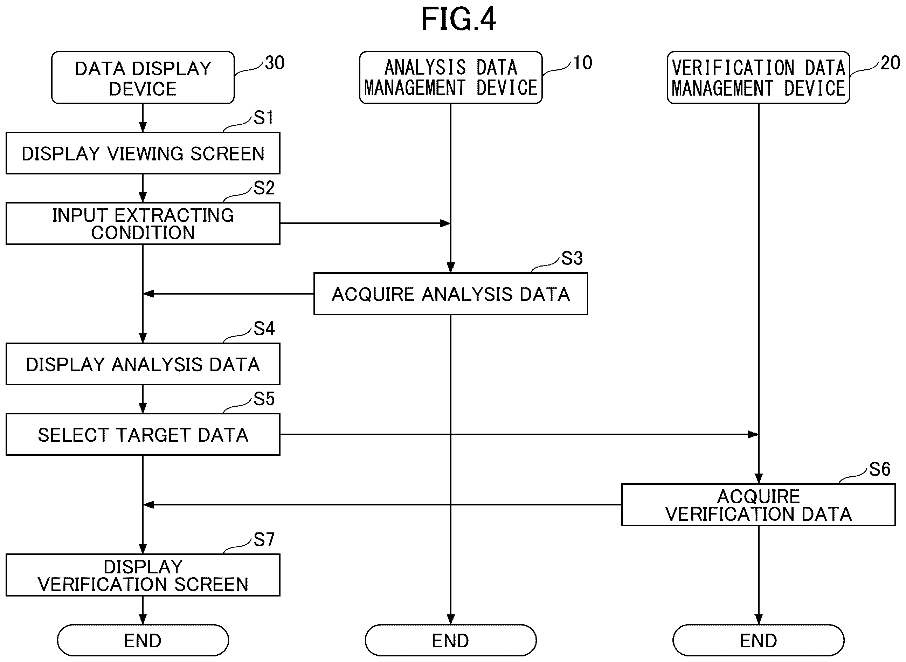

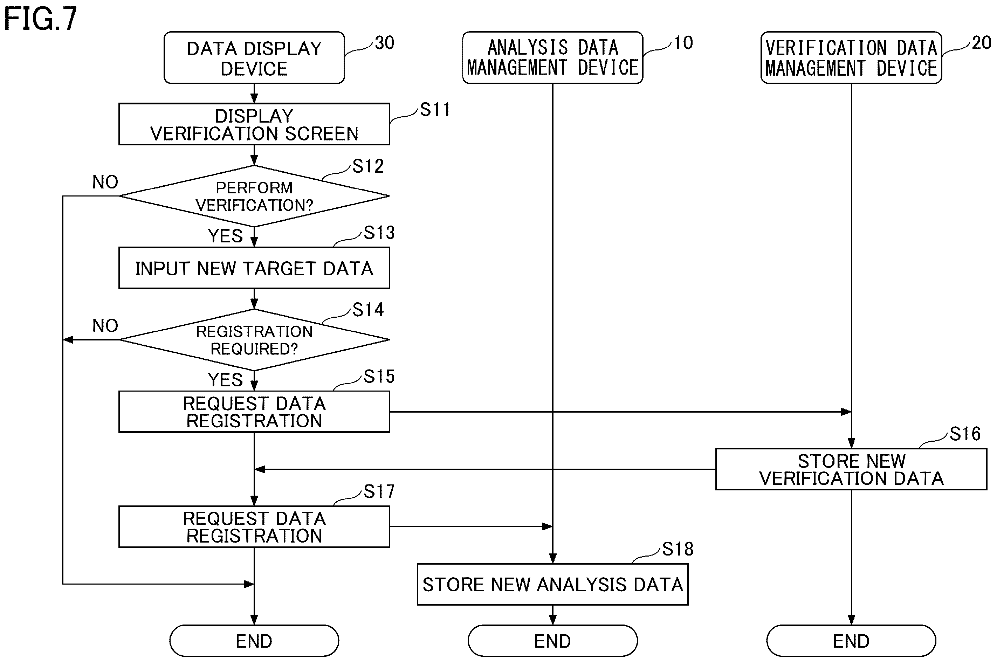

A processing procedure of an analysis method performed by the analysis system 1 of the present embodiment will be described with reference to FIG. 4 through FIG. 7. The analysis method of the present embodiment includes a viewing process (refer to FIG. 4) and a verification process (refer to FIG. 7).

In the present embodiment, it is assumed that the user of the viewing process is a non-dedicated analyst who is not specialized in data analysis, and the user of the verification process is a dedicated analyst who is specialized in data analysis. However, these are merely examples, and the viewing process and the verification process may be performed by the dedicated analyst as a series of processes.

### <<Viewing Process>>

FIG. 4 is a flow chart illustrating an example of the viewing process according to the present embodiment. The viewing process is a process of viewing the analysis data and the verification data.

In step S1, the screen display unit 301 of the data display device 30 outputs the viewing screen to the display device 506. The viewing screen is a screen for displaying the plurality of analysis data in a comparable manner.

### (Viewing Screen)

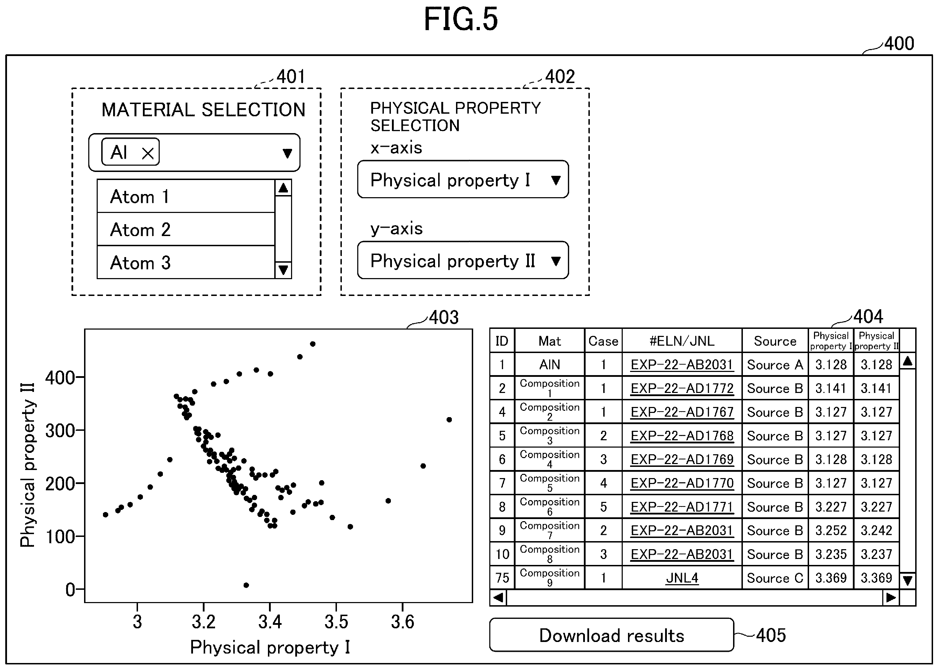

The viewing screen of the present embodiment will be described with reference to FIG. 5. FIG. 5 is a schematic diagram illustrating an example of the viewing screen of the present embodiment.

As illustrated in FIG. 5, a viewing screen 400 of the present embodiment includes a material selection field 401, a physical property selection field 402, a graph display field 403, a table display field 404, and a download button 405. Only one of the graph display field 403 and the table display field 404 may be displayed, or one of the graph display field 403 and the table display field 404 may be displayed in a switchable manner according to an operation performed by the user.

The material selection field 401 is an input field for selecting the material as the extraction condition for extracting the analysis data. When the material is selected in the material selection field 401, the analysis data including the selected material is extracted. A number of materials selectable in the material selection field 401 may be two or more. In the example illustrated in FIG. 5, aluminum (Al) is input in the material selection field 401. In this case, the analysis data related to a substance including aluminum in a composition thereof is extracted.

The physical property selection field 402 is an input field for selecting a physical property to be displayed for analyzing the analysis data. The physical property selected in the physical property selection field 402 is used as an index when the extracted analysis data is displayed in the graph display field 403 and the table display field 404. The index is an x-axis and a y-axis in a two-dimensional plot diagram.

The graph display field 403 is a display field for displaying the analysis data in a graph format. In the example illustrated in FIG. 5, the graph display field 403 is a two-dimensional plot diagram, and the analysis data is plotted with the physical properties selected in the physical property selection field 402 as the x-axis and the y-axis.

The table display field 404 is a display field for displaying the analysis data in a table format. In the example illustrated in FIG. 5, data items representing respective elements of the analysis data are displayed in a list, and the physical properties selected in the physical property selection field 402 are included in the data items.

The download button 405 is a button for downloading the analysis data. When the user presses the download button 405, the analysis data displayed in the graph display field 403 and the table display field 404 is output in a comma-separated values (CSV) format, a data format of a desired spreadsheet software, or the like, and stored in a storage unit such as the HDD 504 of the data display device 30.

The description will return to the description of FIG. 4. In step S2, the analysis data acquisition unit 302 of the data display device 30 acquires the extraction condition input from the viewing screen 400, in response to an operation performed by the user. Specifically, the analysis data acquisition unit 302 acquires the identification information for identifying the material input in the material selection field 401. The identification information for identifying the material is an element symbol, an atomic number, a chemical formula, or the like, for example. Next, the analysis data acquisition unit 302 transmits an acquisition request for the analysis data to the analysis data management device 10. The acquisition request includes the acquired extraction condition.

In step S3, the analysis data management unit 101 of the analysis data management device 10 receives the acquisition request for the analysis data from the data display device 30. Next, the analysis data management unit 101 reads the analysis data related to the substance matching the received extraction condition from the analysis data storage unit 100. Then, the analysis data management unit 101 transmits the read analysis data to the data display device 30.

In step S4, the analysis data acquisition unit 302 of the data display device 30 receives the analysis data from the analysis data management device 10. Next, the analysis data acquisition unit 302 transmits the received analysis data to the analysis data display unit 303.

The analysis data display unit 303 receives the analysis data from the analysis data acquisition unit 302. Next, the analysis data display unit 303 acquires a display setting input from the viewing screen 400. Then, the analysis data display unit 303 displays the analysis data in the graph display field 403 and the table display field 404 of the viewing screen 400, based on the acquired display setting.

In step S5, the target data selection unit 304 of the data display device 30 selects the target data from the plurality of analysis data displayed on the viewing screen 400, in response to an operation performed by the user with respect to the viewing screen 400. Next, the target data selection unit 304 transmits information indicating the verification data associated with the selected target data, to the verification data acquisition unit 305.

The verification data acquisition unit 305 receives information indicating the verification data from the target data selection unit 304. Next, the verification data acquisition unit 305 transmits an acquisition request for the verification data to the verification data management device 20. The acquisition request for the verification data includes information indicating the received verification data.

In the graph display field 403 or the table display field 404 of the viewing screen 400 illustrated in FIG. 5, a link to the verification data is associated with each of the plurality of analysis data. When the user performs a predetermined operation with respect to the link associated with the analysis data in the graph display field 403 or the table display field 404, the analysis data is selected as the target data.

For example, a data item (#ELN/JNL) indicating the link to the verification data may be displayed in the table display field 404. When the user clicks the link, an acquisition request for the linked verification data is transmitted to the verification data management device 20.

For example, a link to the verification data may be displayed in association with a plot corresponding to each of the plurality of analysis data, in the graph display field 403. In this case, when the user performs an operation (for example, clicking or the like) to select the plot, an acquisition request for the linked verification data is transmitted to the verification data management device 20, for example. In addition, the URL of the linked verification data may be displayed by performing an operation (for example, mouseover or the like) to superimpose a pointer on the plot corresponding to each of the plurality of analysis data.

In step S6, the verification data management unit 201 of the verification data management device 20 receives the acquisition request for the verification data from the data display device 30. Next, the verification data management unit 201 reads the verification data from the analysis data storage unit 100, based on the information indicating the received verification data. Then, the verification data management unit 201 transmits the read verification data to the data display device 30.

In step S7, the verification data acquisition unit 305 of the data display device 30 receives the verification data from the verification data management device 20. Next, the verification data acquisition unit 305 transmits the received verification data to the verification data display unit 306.

The verification data display unit 306 receives the verification data from the verification data acquisition unit 305. Next, the verification data display unit 306 generates a verification screen in which the received verification data is embedded. Then, the verification data display unit 306 transmits the generated verification screen to the screen display unit 301.

The screen display unit 301 outputs the received verification screen to the display device 506. The verification screen is a screen for displaying the analysis data and the verification data in association with each other.

### (Verification Screen)

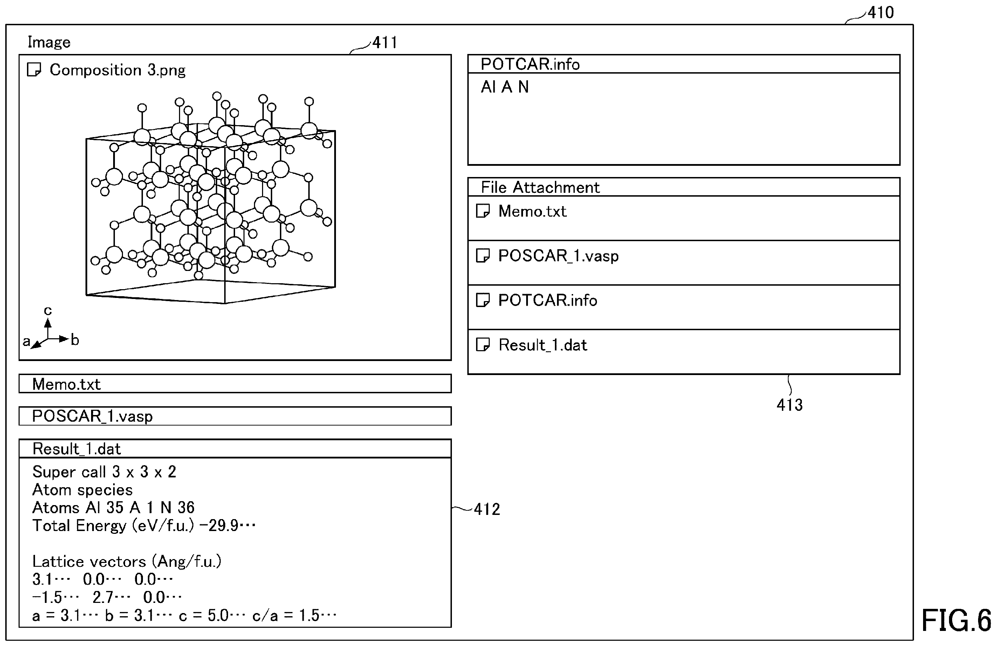

The verification screen according to the present embodiment will be described with reference to FIG. 6. FIG. 6 is a schematic diagram illustrating an example of the verification screen of the present embodiment.

As illustrated in FIG. 6, the verification screen 410 of the present embodiment includes a substance information display field 411, a history information display field 412, and a file display field 413. The verification screen 410 illustrated in FIG. 6 is an example of a verification screen that is displayed when the verification data is the electronic lab notebook. The electronic lab notebook illustrated in FIG. 6 is an example of a notebook in which calculation results of first principles quantum mechanical calculations, performed using a computational chemistry software called VASP (registered trademark), are recorded.

An image representing a crystal structure of the substance identified by the identification information included in the target data is displayed in the substance information display field 411. The information displayed in the substance information display field 411 may be any information as long as the information can identify the substance.

History information at the time when the analysis data is generated is displayed in the history information display field 412. The history information display field 412 illustrated in FIG. 6 is an example of a log file that is output from the computational chemistry software. The information displayed in the history information display field 412 may be any information as long as the information can verify the generation process at the time when the physical properties included in the analysis data are calculated.

A list of electronic data, recorded with the condition values and the history information at the time when the analysis data is generated, is displayed in the file display field 413. A file (POSCAR_1.vasp,POTCAR. info) recorded with each of the parameters input to the computational chemistry software, a log file (Result_1. dat) output from the computational chemistry software, a text file (Memo.txt) recorded with a memo or the like of an experimenter, or the like are displayed in the file display field 413 illustrated in FIG. 6. The contents of each file can be displayed by performing an operation with respect to the file display field 413.

The user can easily display the verification screen 410 for displaying the verification data related to the desired analysis data, by performing an operation with respect to the analysis data from the viewing screen 400. Accordingly, the user can verify the validity of each data by a simple operation, while analyzing the data.

### <<Verification Process>>

FIG. 7 is a flow chart illustrating an example of the verification process according to the present embodiment. The verification process is a process of verifying the validity of the analysis data based on the verification data.

In step S11, the screen display unit 301 of the data display device 30 outputs the verification screen 410 to the display device 506. The verification screen 410 displays the verification data related to the target data selected by the user.

In step S12, the screen display unit 301 of the data display device 30 determines whether or not to verify the analysis data associated with the verification data displayed on the verification screen 410. In a case (YES) where it is determined that the analysis data is to be verified, the screen display unit 301 advances the process to step S13. On the other hand, in a case (NO) where it is determined that the analysis data is not to be verified, the screen display unit 301 ends the verification process.

The determination to determine whether or not to verify the analysis data may be made by displaying options for selecting whether or not to verify the analysis data on the verification screen 410, and making the determination based on the option selected by the user, for example. Alternatively, the determination may be made based on whether or not the user performed an operation to open an input screen for inputting new analysis data, for example. In a case where the user performs the operation to open the input screen, it is assumed that new analysis data is generated, and thus, it may be regarded that the new analysis data is to be verified.

In step S13, the user regenerates the analysis data based on the verification data. The regeneration of the analysis data is performed by verifying the condition values and the history information included in the analysis data, and recalculating the physical properties using the computational chemistry software or the like based on the verification result, for example. In addition, the physical properties may be remeasured by verifying the experimental conditions included in the analysis data, and performing the experiment again based on the verification result, for example.

The user inputs the regenerated new analysis data and the new verification data related to the new analysis data to the input screen displayed on the display device 506 of the data display device 30. The data input unit 307 of the data display device 30 receives the input of the new analysis data and the new verification data, in response to an operation performed by the user with respect to the input screen.

In step S14, the data input unit 307 of the data display device 30 determines whether or not registration of the received new analysis data is required. In a case (YES) where it is determined that the new analysis data is to be registered, the data input unit 307 transmits the new analysis data and the new verification data to the data registration unit 308, and the process advances to step S15. On the other hand, in a case (NO) where it is determined that the registration of the new analysis data is not required, the data input unit 307 ends the verification process.

The determination to determine whether or not the registration is required may be performed by determining whether or not the new analysis data includes physical properties different from those of the original analysis data displayed on the viewing screen 400, for example. Alternatively, the determination may be performed by comparing the history information included in the original verification data displayed on the verification screen 410 with the history information included in the new verification data, and determining whether or not the physical properties are obtained in a different generation process, for example.

In step S15, the data registration unit 308 of the data display device 30 receives the new analysis data and the new verification data from the data input unit 307. Next, the data registration unit 308 transmits a registration request for the verification data to the verification data management device 20. The registration request includes the received new verification data.

In step S16, the verification data management unit 201 of the verification data management device 20 receives the new verification data from the data display device 30. Next, the verification data management unit 201 stores the received new verification data in the verification data storage unit 200. Then, the verification data management unit 201 transmits a link to the new verification data stored in the verification data storage unit 200 to the data display device 30.

In step S17, the data registration unit 308 of the data display device 30 receives the link to the new verification data from the verification data management device 20. Next, the data registration unit 308 transmits a registration request for the analysis data to the analysis data management device 10. The registration request for the analysis data includes the new analysis data received from the data input unit 307 and the link to the new verification data received from the verification data management device 20.

In step S18, the analysis data management unit 101 of the analysis data management device 10 receives the new analysis data from the data display device 30. Next, the analysis data management unit 101 stores the received new analysis data in the analysis data storage unit 100 in association with the link to the new verification data. The analysis data management unit 101 may store the new analysis data as analysis data different from the original analysis data, or may update the original analysis data with the new analysis data.

### <Effects of Embodiment>

The data display device 30 of the present embodiment displays the plurality of analysis data in a comparable manner, and displays the target data selected from the plurality of analysis data and the verification data for verifying the validity of the target data in association with each other. Hence, according to the data display device 30 of the present embodiment, the validity of the analysis data can be verified.

The data display device 30 of the present embodiment registers the new analysis data regenerated based on the verification data in association with the verification data. Thus, according to the data display device 30 of the present embodiment, it is possible to improve the reliability and reproducibility of the analysis data, and to obtain a more accurate analysis result.

The user can develop a new material, based on the analysis result obtained by the analysis system 1 according to the present embodiment, for example. According to the analysis system 1 of the present embodiment, because a highly accurate analysis result can be obtained, a new material can be efficiently developed. By using the analysis result obtained by the analysis system 1 of the present embodiment, a new functional material using aluminum nitride (AlN), for example, can be efficiently developed.

### [Supplement]

Each function of the above described embodiments can be implemented in one or more processing circuits. The "processing circuit" in the present specification includes a processor programmed to perform each function by software, such as a processor implemented by an electronic circuit, or a device such as an application specific integrated circuit (ASIC), a digital signal processor (DSP), a field programmable gate array (FPGA), a conventional circuit module, or the like designed to perform each function described above.

Although the embodiments of the present invention are described above in detail, the present invention is not limited to these embodiments, and various variations and modifications can be made within the scope of the gist of the present invention described in the claims.

This application is based upon and claims priority to Japanese Patent Application No. 2022-194468 filed on December 5, 2022, before the Japan Patent Office, the entire contents of which are incorporated herein by reference.

### DESCRIPTION OF REFERENCE NUMERALS

1: Analysis system
10: Analysis data management device
100: Analysis data storage unit
101: Analysis data management unit
20: Verification data management device
200: Verification data storage unit
201: Verification data management unit
30: Data display device
301: Screen display unit
302: Analysis data acquisition unit
303: Analysis data display unit
304: Target data selection unit
305: Verification data acquisition unit
306: Verification data display unit
307: Data input unit
308: Data registration unit

## Claims

1. A data display device communicable with an analysis data management device that manages analysis data and a verification data management device that manages verification data via a network, the data display device comprising:
an analysis data acquisition unit configured to acquire a plurality of analysis data from the analysis data management device;
an analysis data display unit configured to display the plurality of analysis data in a comparable manner;
a verification data acquisition unit configured to acquire, from the verification data management device, verification data for verifying a validity of target data selected from the plurality of analysis data; and
a verification data display unit configured to display the target data and the verification data in association with each other.

2. The data display device as claimed in claim 1, wherein:
the analysis data display unit is configured to display the plurality of analysis data in association with a link to the verification data, and
the verification data acquisition unit is configured to acquire the verification data related to the analysis data associated with the link in response to an operation with respect to the link.

3. The data display device as claimed in claim 1 or 2, further comprising:
a data input unit configured to receive the target data regenerated based on the verification data; and
a data registration unit configured to register the regenerated target data in the analysis data management device.

4. The data display device as claimed in any one of claims 1 to 3, wherein:
the analysis data includes information indicating a material and physical properties of the material, and
the verification data includes condition values used for generating the physical properties, and history information at a time when the physical properties are generated.

5. The data display device as claimed in any one of claims 1 to 4, wherein the verification data is an electronic lab notebook or article data.

6. An analysis system comprising an analysis data management device that manages analysis data, a verification data management device that manages verification data, and a data display device, communicable with one another via a network, wherein the data display device includes:
an analysis data acquisition unit configured to acquire a plurality of analysis data from the analysis data management device;
an analysis data display unit configured to display the plurality of analysis data in a comparable manner;
a verification data acquisition unit configured to acquire, from the verification data management device, verification data for verifying a validity of target data selected from the plurality of analysis data; and
a verification data display unit configured to display the target data and the verification data in association with each other.

7. A data display method to be implemented in a computer communicable with an analysis data management device that manages analysis data and a verification data management device that manages verification data via a network, the data display method comprising procedures performed by the computer and including:
acquiring a plurality of analysis data from the analysis data management device;
displaying the plurality of analysis data in a comparable manner;
acquiring, from the verification data management device, verification data for verifying a validity of target data selected from the plurality of analysis data; and
displaying the target data and the verification data in association with each other.

8. A program for causing a computer, communicable with an analysis data management device that manages analysis data and a verification data management device that manages verification data via a network, to perform procedures including:
acquiring a plurality of analysis data from the analysis data management device;
displaying the plurality of analysis data in a comparable manner;
acquiring, from the verification data management device, verification data for verifying a validity of target data selected from the plurality of analysis data; and
displaying the target data and the verification data in association with each other.
